# EUROPEAN PATENT SPECIFICATION

(11) **EP 0 450 942 B1**
(45) Date of publication and mention of the grant of the patent: **06.09.1995**
(21) Application number: 91302939.3
(22) Date of filing: 04.04.1991
(51) Int. Cl.: B60G 17/005, B62D 61/12, B60F 1/04

(54) **Locking mechanism on a vehicle**
Blockierungsmechanismus für ein Fahrzeug
Mécanisme de blocage pour un véhicule

(30) Priority: 05.04.1990 GB 9007695; 27.07.1990 GB 9016297
(43) Date of publication of application: 09.10.1991
(73) Proprietor: ROR ROCKWELL LIMITED, Llay, Wrexham, Clwyd LL12 0PB (GB)
(72) Inventor: Dixon, Alan Geoffrey, Dodleston, Chester (GB); van Stokkum, Andreas Gerardus Willhelmus Amoldes, NL-5735 EX Aerle-Rixtel (NL)
(74) Representative: Stonehouse, Sidney William

(56) References cited:
- EP-A- 0 137 953
- EP-A- 0 401 100
- DE-A- 2 204 798
- DE-U- 8 805 838
- GB-A- 2 135 732
- US-A- 4 763 923

## Description

This invention relates to a locking mechanism for releasably locking a component on a vehicle in a desired position to which it has been moved, or allowed to move.

One example of a releasable locking mechanism for a vehicle is disclosed in German Patent Application DE-A-2 204 798. This proposes the use of a hook attached to the frame of a vehicle which is moved by an air operated actuator. When a driven wheel of the vehicle is raised from the ground, the hook may be advanced by the actuator to engage an axle hanger attached to the wheel to hold the wheel in a raised, inoperative position.

It is an aim of the present invention to provide an improved method of releasably locking a movable component of a vehicle in a desired position and a locking method adapted to achieve this.

According to a first aspect the present invention consists in a method of releasably locking a movable component of a vehicle in a desired position relative to a supporting part of the vehicle comprising providing:
means on the vehicle operable for moving the component or allowing it to move to and from the desired position;
a latch member and an actuator and a locking member;
and characterised in that:
the latch member and the actuator are carried on one of either the component or the supporting part;
the locking member is carried by the other one of the component and the supporting part and is movable relative thereto between inoperative and locking positions and is normally urged to the inoperative position;
and for locking the component in the desired position said means is operated to move or allow the component to move initially to an approach position in which the actuator rod of the actuator is moved to a locking position and in doing so causes the locking member to be moved into its locking position, and then said means is operated to move the component, or allow the component to move, from the approach position to the desired position at which the locking member and latch member engage in a locking relationship to lock the component in the desired position;
said means having to be operated to move the component, or allow it to move, from the desired position to the approach position, and the actuator having to be returned to its inoperative position before the locking member can move back to its inoperative position.

Preferably the latch member and actuator are adapted to be carried on the component and the locking member is adapted to be mounted on the supporting part of the vehicle.

Desirably the re-application of pressure air to the actuator allows movement of the locking member away from locking relationship with the latch member whereby the component is permitted to move away from said desired position.

Means may be provided to move or allow movement of the component whereby the latch member is moved into and out of engagement with the locking member at the desired position.

The actuator may comprise a spring brake actuator fitted to the vehicle for operation of a wheel brake thereon.

According to a second aspect the invention further consists in a vehicle comprising a supporting part a movable component lockable in a desired position relative to the supporting parts, means operable for moving the component or allowing it to move to and from the desired position, a latch member, an actuator and a locking member, and characterised in that the movable component is releasably lockable in the desired position by a method in accordance with the first aspect of the invention.

According to a further aspect, the invention consists in a locking mechanism adapted for releasably locking a movable component of a vehicle in a desired position relative to a supporting part of the vehicle comprising:
means on the vehicle operable for moving the component or allowing it to move to and from the desired position;
a latch member and an actuator and a locking member;
and characterised in that:
the latch member and the actuator are carried on one of either the component or the supporting part;
the locking member is carried by the other one of the component and the supporting part and is movable relative thereto between inoperative and locking positions and is normally urged to the inoperative position;
the movable component being releasably lockable in the desired position by a method in accordance with the first aspect of the invention.

The locking mechanism in accordance with the present invention is of particular, but not exclusive, utility on freight carrying road trailers which are adapted for rail travel.

One such trailer, for example an articulated trailer, has at least one kingpin at each end for attachment to a rail bogie. The usual kingpin near the front end of the trailer is releasably coupled to a fifth wheel coupling on a tractor whereby the trailer is towed along roads between destinations.

When it is desired to transfer the trailer to rail travel the tractor and trailer combination is reversed over a prepared surface at the rail terminal, in which railway lines are inset, towards a rail bogie which is on the railway lines. The rear end of the trailer chassis is raised to allow it to pass on top of the bogie. Where the trailer is fitted with air suspension this may be effected by operation of air suspension auxiliary system valves to inflate the air springs beyond their normal inflation level. When the trailer rear end is in position over the bogie the chassis is lowered, for example by deflation of the air springs, and secured at its rear to the front of the bogie, which now supports the rear of the trailer. The axle or axles are raised and mechanically locked in the raised position. The landing legs towards the front of the trailer are now lowered and/or extended to raise, or maintain raised, the front end of the trailer. Raising of the front end of the trailer may be accomplished by operation of the landing legs or by elevating the fifth wheel of the tractor unit.

The tractor is removed and a rail bogie is reversed towards the first trailer so that the rear of the second rail bogie is entered below the front end of the first trailer. The second rail bogie may be supporting one end of a second trailer, as described above. The front end of the first trailer is now lowered if necessary, by the landing legs so that the front kingpin is engaged with the rear of the second bogie. In an alternative coupling system the front of the first trailer is pivotally connected to the rear of the second trailer and it may not be necessary to lower the front end of the first trailer to effect this coupling. The landing legs are then raised or retracted leaving the front end of the first trailer supported directly or indirectly by the second bogie. In this way a train of rail-borne trailers is built up for transport on the railway network. When the destination is reached the process is reversed to revert the trailers for use on the roads. There is a further alternative system in which the trailer is secured to the rail bogies by means of twistlocks or equivalent securing means.

Embodiments of the invention will now be described by way of example with reference to the accompanying drawings in which:
Figure 1 is a schematic side elevation showing a tractor, a trailer and a rail bogie;
Figure 2 is a side elevation showing part of one side of a trailer chassis to which an air suspended axle is fitted, an axle lift mechanism and a locking mechanism in accordance with the invention;
Figure 3 shows the locking mechanism of Figure 2 drawn to a larger scale with the axle shown in a raised position;
Figure 4 is a front elevation of the locking member of Figure 3;
Figure 5 is a side elevation of a second embodiment showing part of a trailer chassis to which an air suspended axle is fitted, a two stage axle lift mechanism and incorporating a locking mechanism of this invention, and
Figure 6 is a scrap view similar to Figure 5 showing another two stage lift mechanism.

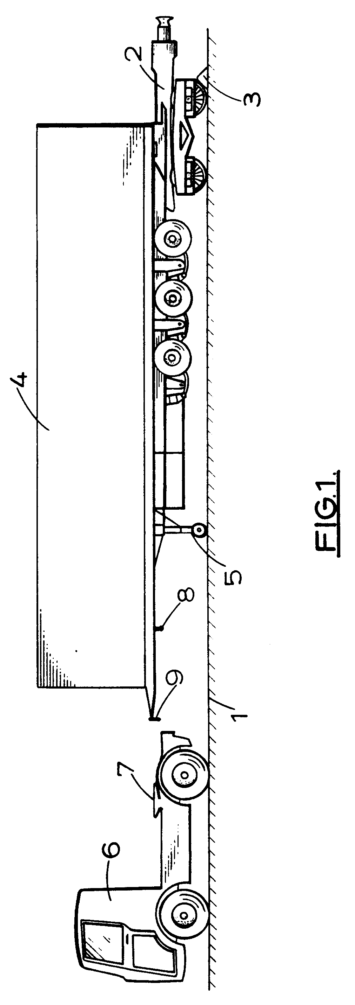

Referring to Figure 1, there is shown a rail terminal surface 1 with a rail bogie 2 on rails at the terminal. Chocks 3 are applied to the rear wheels of the bogie 2 to prevent rearward movement. A trailer 4 has its rear end supported by and locked to the bogie 2 by a rear kingpin (not shown) depending from the trailer and engaged in a fifth wheel-type coupling on the bogie 2. The front end of the trailer 4 is supported by telescopic landing legs 5 which are in an extended condition allowing a tractor 6 to disengage its fifth wheel coupling 7 from a kingpin 8 of the trailer. The trailer 4 also has a front kingpin 9 which is engageable with a fifth wheel-type coupling of a second rail bogie (not shown) which can be engaged to support the front of the trailer, whereupon the landing legs 5 may be raised.

In an alternative construction (not illustrated) the front of a first trailer and the rear of a second trailer may have complementary coupling members whereby the first trailer is connected to the second trailer, the rear end of the second trailer being carried by a rail bogie which then also indirectly supports the front end of the first trailer.

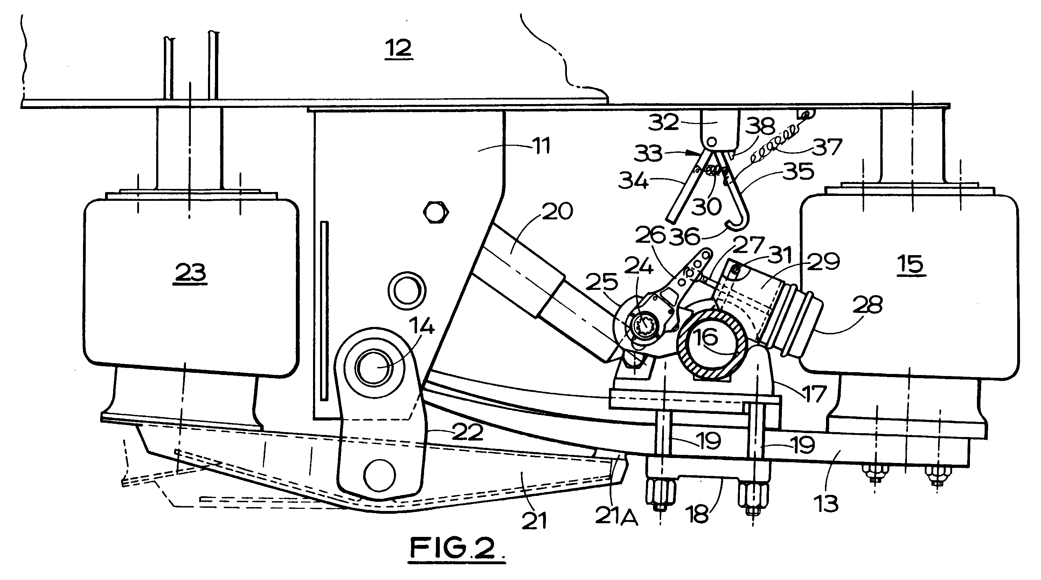

Trailer 4 has running gear comprising three air suspended axles and a lift mechanism is provided for each axle, as will be described with reference to Figure 2. As shown in Figure 1, the axles are in the raised position and are mechanically locked in that position.

Referring now to Figure 2, an axle (in section) is shown with an air suspension and an axle lift mechanism. The suspension and lift mechanism are duplicated on the other side of the trailer. The suspension is of a well known type having a hanger bracket 11 secured to and depending from the trailer chassis 12. A leaf spring 13 having upper and lower leaves has its front end pivotally mounted by a pivot 14 in the bracket 11. An air spring 15 is secured between the rear end of the spring 13 and the trailer chassis 12.

An axle, of which only the axle tube 16 (in section) is shown, is secured, as by welding, to a mounting 17 which sits on top of the leaf spring 13. A plate 18 is arranged opposite mounting 17 below the leaf spring 13, and U bolts 19 clamp the mounting and plate 18 to the spring to secure the axle to the spring. A shock absorber 20 is pivotally secured between the bracket 11 and mounting 17.

A lift beam 21 has aligned upstanding plates 22 fixed at each side and these are pivotally connected to the bracket 11 co-axially with the pivot 14. An air bag 23 is connected between the front end of the beam 21 and the chassis 12. The rear end of the beam 21 engaged the lower leaf of the spring 13 at a resilient, eg. rubber, pad 21A. On release of air pressure from the air springs 15 and application of air pressure to the air bags 23 the beam 21 is pivoted in an anti-clockwise direction (as drawn) causing the leaf spring 13 to pivot also in an anti-clockwise direction, whereby the axle is raised towards the trailer chassis 12.

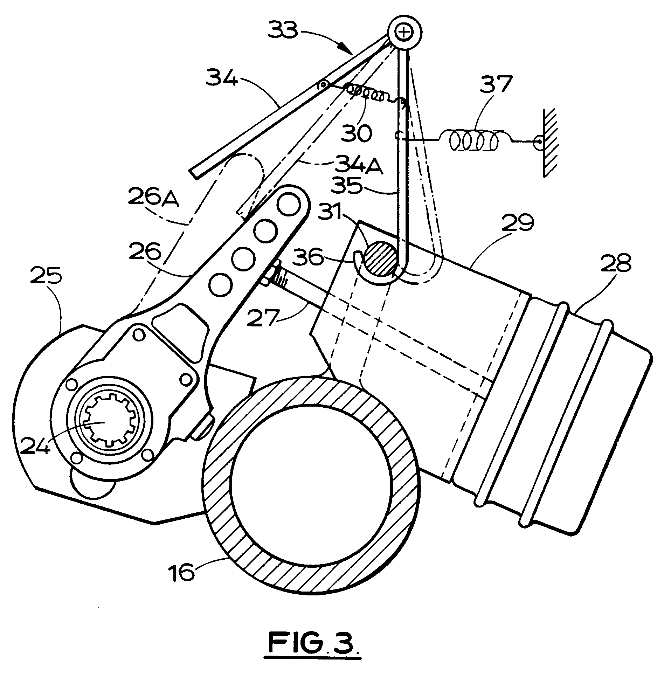

At each end of the axle a conventional brake (not shown) of the internal expanding shoe and drum type is fitted. This is applied by rotation of a camshaft 24 having an S cam which acts on the brake shoes to expand them against the brake drum. The camshaft 24 is carried in a bearing at the brake end and in another bearing mounted in a bracket 25 secured to the axle tube 16. The free end of the camshaft 24 mounts one end of a brake lever 26, which may comprise a slack adjuster. Towards its other end the brake lever 26 is pivotally connected to the actuator rod 27 of a spring brake actuator 28 which is mounted on a bracket 29 secured to the axle tube 16. The spring brake actuator 28 may be of the type described in our British Patent No. 2 135 732. A latch member 31 in the form of a rod of inverted L-shape is secured between the bracket 29 and the axle tube 16 (as is seen more clearly in Figure 3).

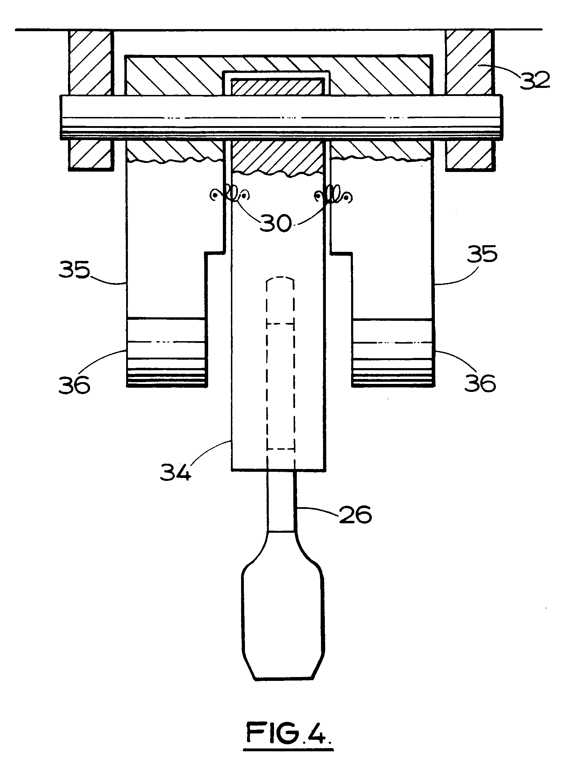

Depending from the chassis 12 above each latch member 31 is a bracket 32 which pivotally carries a locking member 33. The locking member 33 has a forward arm 34 and two rear arms 35, the latter terminating in hooks 36. This member is also seen in Figure 4. The forward arm 34 and the two connected rear arms 35 are co-axially pivotally carried by the bracket 32 and are connected by tension springs 30. One or more tension springs 37 are arranged between the rear arms 35 of the locking member 33 and the chassis 12 to bias the member 33 against a stop 38 on the bracket 32. The tension springs 30, which are secured around pins on the arms 34, 35, also act as stops when close coiled to limit angular closure of the forward arm 34 towards the rear arms 35. Alternatively a separate stop or stops may be provided for this purpose. The tension springs 30, shown close coiled, are preferably pre-tensioned and have to override the springs 37 to cause rotation of the rear arms 35 and the hooks 36 to the lock position.

As the air bag 23 operates the lift beam 21 on each side of the trailer to raise the axle the ends of the brake levers 26 enter the space between the forward and rear arms 34, 35 of the respective locking member 33 so as to engage the forward arms 34, as indicated by the broken line position 34A of arm 34 in Figure 3. The air pressure is then sequentially released whereby the spring brake actuators 28 operate, extending the actuator rods 27 which rotate the brake levers 26 to the broken line position 26A shown in Figure 3, and so rotating the locking members 33 in a clockwise (as drawn) direction so that the hooks 36 on the rear arms 35 move into position below the horizontal portions of the latch members 31. The air pressure is then released from the air bags 23 and the axle drops a short distance to engage the latch members 31 in the hooks 36, thereby retaining the axle in its raised position. The springs 30 will extend to accommodate over-travel of the brake levers 26 beyond the position at which the arms 35 engage the latch members 31.

It will be appreciated that the brake levers 26 at each side of the axle may not necessarily be, and always remain, in alignment transversely of the trailer, with the result that one lever 26 may engage the forward arm 34 of its associated locking member 33 before the other. The hooks 36 at each side may be connected to move in unison, for example by a torsion bar which acts as the journal for the pivot mounting of the forward arms 34. In this way if one lever 26 leads the other that lever will engage its forward arm 34 and cause rotation of both pairs of hooks 36 simultaneously into the locking position below the respective latch members 31.

The latch members 31 may be arranged in a variety of ways to suit particular axle installations. For example, a single latch member 31 could be used separate from the brackets 29 but extending in the space between them and secured to the axle tube 16. Alternatively the single latch member 31 could extend between the brackets 29 and be secured to them. If the trailer has a narrow track the brackets 29 may be close together and it may be desirable for the latch members 31 to extend outboard of the brackets 29, for example each secured between the adjacent bracket 29 and the axle tube 16.

When it is required to lower the axle the air bags 23 are first inflated so that the latch members 31 are raised out of the hooks 36 and then air pressure is applied to the spring brake actuators 28 causing the actuator rods 27 to be retracted. Pressure air is then released from the air bags 23 and introduced to the air springs 15 thereby lowering the axle to its normal position. As the brake levers 26 move away from the forward arms 34 of the locking members 33 the springs 37 act to rotate the locking members 33 in an anti-clockwise direction (as drawn) to the stop 38, resetting them for the next locking operation.

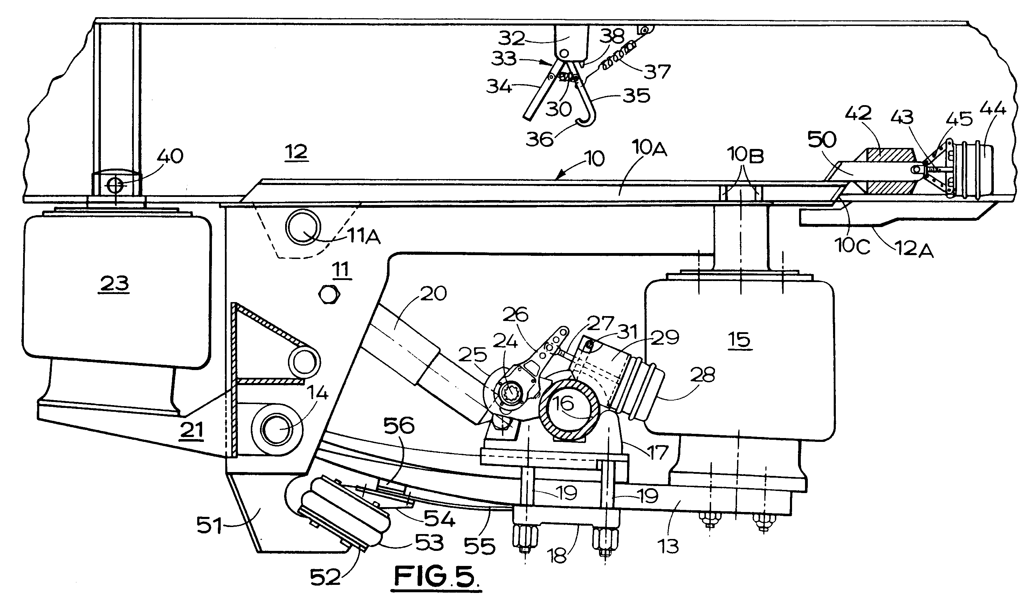

Reference will now be made to Figure 5 of the drawings showing a second embodiment of the invention. As in the case of Figure 2, Figure 5 is a side elevation on one side of the trailer showing an axle (in section) with an air suspension and two stage lift mechanism. The suspension is duplicated on the other side of the trailer. The same reference numbers are retained for similar parts and where the construction is the same, the description is not repeated.

The suspension is a modification of the type shown in Figure 2 and has a hanger bracket 11 pivotally secured at pivot 11A to and depending from the trailer chassis 12. An air spring 15 is secured between the rear end of the spring 13 and a sub-frame 10 integral with bracket 11, to which further reference will be made.

A bracing structure, shown generally at 41, connects the brackets 11 trarsversely of the vehicle.

Lift beams 21, located between the brackets 11 at each side of the vehicle, are connected to the respective brackets 11, as by welding. An air bag 23 is connected between the front end of each beam 21 and a compliant pivot 40 on the chassis 12, the pivot allowing limited articulation. Alternatively, a single lift beam 21 may be connected to the bracing structure 41 between the brackets 11 and a single air bag 23 may be mounted to act between the beam 21 and the chassis, for example a cross-member of the chassis. Air bag 23 may be of the convoluted type.

Each bracket 11 has a downward extension 51 which includes a lower mounting 52 for an auxiliary air bag 53. A bracket 54 secured to the upper surface of the air lag 53 extends upwardly and rearwardly and mounts the front end of a light leaf spring 55 whose rear end is anchored at plate 18. A pad 56 of rubber or like material secured to the upper surface of the leaf spring 55 bears against the lower surface of leaf spring 13.

Referring again to the sub-frame 10, this comprises one longitudinally extending member 10A at each side of the vehicle (as illustrated, for one side, in Figure 5). The longitudinally extending members 10A at the two sides of the vehicle are interconnected across the vehicle by transverse members 10B. The rear end of each longitudinally extending member 10A has an inclined surface which constitutes a latch member 10C. A mechanical stop 12A is secured to the undersurface of the chassis 12, at each side of the vehicle, to be engaged by members 10A to limit clockwise (as drawn) rotation of the sub-frame 10 about the pivot 11A.

Mounted on the chassis 12, at each side, behind the sub-frame 10 is a locking member 50 which is slidable in a guide 42. The front end of the locking member 50 has an inclined surface which co-operates with the inclined surface of the latch member 10C. The rear end of the locking member 50 is pivotally secured to the rod 43 of an actuator 44, which may be similar to the actuator 28 - that is to say, having a rod which is extended by spring action within, or external to, the actuator and which is retracted by application of pressure air to a diaphragm or piston within the actuator. An assister spring 45 may be arranged between the actuator 44 and the locking member 50, or this spring 45 may substitute for a spring within the actuator and the latter may be arranged to retract the rod by the application of pneumatic pressure. Alternatively, if it is convenient to do so, the actuator may be reversed so that the locking member 50 is extended by pneumatic pressure in the actuator and retracted by spring action, or it may be pneumatically powered in both directions. Powered actuation may also be effected hydraulically or electrically but it will usually be more convenient to use pneumatic power.

When it is desired to retract the running gear, that is to say the axle and suspension assembly, the air springs 15 are first vented and pressure air is supplied at a controlled rate to the auxiliary air bags 53 to cause lifting of the axle. Completion of this first stage lift may be sensed by, for example, a pressure switch connected to the auxiliary air bag(s) 53 which, on actuation, causes trapping of the air in those bags 53 and admission of pressure air to the air bag(s) 23 and to the diaphragms/pistons of the actuators 44. The pressure reacted in the air bag(s) 23 due to the weight and lever arm of the running gear is arranged to be sufficient to cause operation of the actuators 44 to withdraw the locking members 50. This now permits rotation of the brackets 11 about the pivots 11A (anti-clockwise as drawn) on extension of the bag(s) 23, whereby the axle and suspension are raised towards the trailer chassis 12 and then locked in the raised position by the locking members 33 engaging with the latch members 31 of the axle in the manner previously described, on sequential venting of the actuators 28 and then the air bag(s) 23. It will be appreciated that at this point the trailer is fully supported by a bogie at the rear and by either a tractor or landing legs, or by another bogie, at the front. For rail operation it is desirable for safety reasons that all pressure air is vented and consequently the running gear needs to be retained in its retracted position by some means which is/are independent of pressure air.

The running gear is lowered by first pressurising the bag (s) 23 (and actuators 44) and then the diaphragms/pistons of the actuators 28 in a sequenced operation (which may be, for example, pressure time or mechanical sequencing). This results in release of the locking members 33 from the latch members 31, in the manner previously described, and thus freeing of the running gear to allow it to lower. Subsequent controlled venting of the bag(s) 23 allows lowering of the running gear under its own weight. The rate of lowering of the running gear will depend upon the characteristics of the air bag(s) 23, the geometry of the suspension and the design of valve and pipework which controls venting of the bag(s) 23. This can be arranged so as to provide a rapid or a slower lowering. The actuators 44 may be designed for a relatively high or a relatively low pressure requirement (the "hold-off pressure") before extension of their rods takes place. The locking members 50 may then be engaged by the latch members 10C in the final stage of lowering and, due the the co-operation of the relatively inclined surfaces of the locking and latch members, the latch members will force withdrawal of the locking members 50 to allow the sub-frame 10 to pass down below the locking members 50 to the mechanical stops 12A. Alternatively, the limit of lowering may be defined by internal stops within the air bay(s) 23. The springs of the actuators 44, and/or assister springs 45, on decay of pressure in the air bag(s) 23, cause extension of the locking members 50 to lock the running gear in its lowered, running, position.

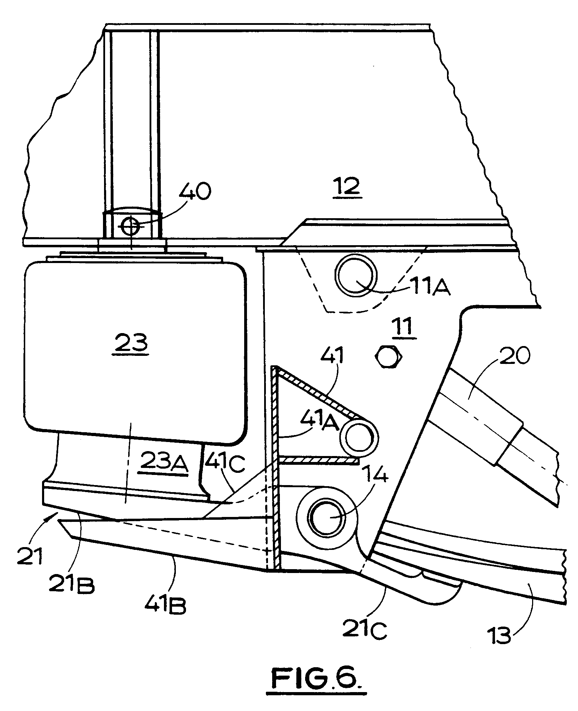

Referring now to Figure 6, the two stage lift mechanism shown is generally similar to that of Figure 5 except that the two beams 21 provided, one being a mirror image of the other, are pivotally carried between the brackets 11, co-axially with the pivot 14. Each beam 21 extends laterally of the trailer and has an inner arm 21B extending forwardly to engage the lower surface of the piston 23A of air bag 23 arranged midway between the brackets 11, and an outer arm 21C which extends rearwardly and has a pad 21D, of rubber or like material, which engages the lower surface of the leaf spring 13.

The arms 21B of the beams pass through openings in a vertical member 41A of the bracing structure 41 which connects the brackets 11 together, transversely of the vehicle. The openings allow pivotal movement of the beams 21. A member 41B and a gusset 41C are secured to the bracing structure 41 midway between the brackets 11 and the member 41B extends forwardly under the piston 23A, between the arms 21B.

In operation, initial extension of the piston 23A of the air bag 23 causes anti-clockwise (as drawn) rotation of the beams 21, resulting in compression of the air springs 15 while they are venting and raising of the axle tube 16 due to anti-clockwise pivoting of the leaf springs 13 about the pivot 14. When the piston 23A reaches the member 41B, preferably coincidentally with full compression of the air springs 15, further extension will then cause anti-clockwise pivoting of the brackets 11 and sub-frame 10 about the pivots 11A, and raising of the axle and suspension assembly continues as has already been described.

These embodiments of Figures 5 and 6 cause compression of the air bags 15 as they are venting and can help to reduce the cycle time for raising the running gear.

The cost effectiveness of road/rail transport operations is significantly affected by reducing the labour content and cycle time for converting from road to rail, and vice-versa. The present invention provides a significant contribution in that the operations of raising the running gear, locking it in its raised position, unlocking it, lowering and locking in the lowered position can be effected by remote control by a single operative - and may be controlled from the cab of a tractor coupled to a trailer.

It will be appreciated that the locking mechanism of this invention is not restricted in its application to the particular embodiments described herein, nor indeed is it restricted to axle and suspension assemblies. Mention will now be made, by way of example only, of other applications.

A latch member (as 10C of Figure 5 inverted) could be provided at or adjacent to the rear end of each leaf spring 13 and a locking member, guide and actuator (as 50 inverted, 42 and 44) could depend from the chassis 12 to provide a locking mechanism to retain that axle and suspension assembly in a raised position.

It will have been appreciated from the description which has been given relating to transfer of the trailer to and from rail operation that there is a requirement for the landing legs to be lowered to support the front end of the trailer, and subsequently to be raised. There are a variety of designs of landing legs available. These include telescopic hydraulically powered legs, telescopic mechanically geared legs with manual or pneumatic operation and pivotally retractable legs. The latter may have provision to be extended manually or by power operation, including electric power.

Hydraulically powered legs and mechanically geared legs present no problem in ensuring they remain safely in raised or lowered position. However, with pivotally retractable legs it is necessary to provide means for locking them in raised and lowered positions, and desirably for powered operation between these positions.

The landing legs for a trailer for road/rail operation such as has been described can be operated between pre-defined height limits for supporting the front end of the trailer and having ground clearance in the rail transport mode when used in conjunction with an air suspended tractor. The latter allows unloaded operation of the landing legs between the pre-defined height limits. To this end they may be pivotally mounted on the trailer to facilitate retraction for the rail transport mode. Locking mechanism such as has been described may be used to lock such landing legs down and for locking them in a retracted position, and pneumatic power may be used for moving the landing legs between lowered and raised positions. The locking mechanism which has been described may be complemented by audio and or visual indication/warning as to correct functioning of the locking mechanism, for example to give warning if the running gear is in the lowered condition but not locked down or that it is in the raised position and not locked up.

It is contemplated that powered operation of such pivotally retractable legs may be provided by a telescopic jack powered by pressure air under the control of a selector valve to raise and lower the legs, or they may be lowered by gravity assisted by a spring or springs. A mechanical "UP" lock for the legs may be released by the operation of one of the spring brake actuators 28 through a mechanical connection between a locking member 33, for example an arm 35, and the lock co-incident with movement of the locking member 33 to the position in which the hooks 36 are below the latch members 31. The legs may be locked in the down position by an automatic spring loaded lock associated with extension of the jack so that when pressure air is admitted to the jack to retract the legs the initial movement is to release the "DOWN" lock and then retract the legs. The "UP" lock may re-engage automatically, by spring loaded action, when the legs reach the retracted position.

Alternatively, a separate actuator, having spring actuation in one direction, may be used for operating either or both locks so that release of air pressure may allow operation of the actuator to cause engagement/release of a lock and application of air pressure causes respectively release/engagement of the lock.

As a further alternative the movement of a locking member 33 by the spring stroke of an actuator 28 may be utilised to operate a valve whereby the landing legs are released and/or lowered under hydraulic, electric or pneumatic power, or by gravity with spring assistance, automatically.

In the practical application of this invention to an air suspended trailer the trailer may be equipped with means for raising and lowering the chassis, for example as described in our British Patent Application No. 9023651.4, to facilitate engagement of the rear of the trailer with a rail bogie. Also, the trailer is preferably equipped with an air pressure reservoir to assist, or effect, re-inflation of the air springs when the trailer is being reverted from the rail mode to the road mode.

This invention is also, of course, applicable in the case where a vehicle has the wheels independently suspended, for example by stub axles, instead of having an axle beam with a wheel or wheels at each end - for example as described in our British Patent No. 2 165 195.

Thus in its simplest application the present invention utilises an existing component or components (the spring brake actuators) to carry out an additional necessary function and so obviates the cost, weight and complication of making separate provision for the additional function.

## Claims

1. A method of releasably locking a movable component of a vehicle in a desired position relative to a supporting part of the vehicle comprising providing:
means (21,23,15) on the vehicle operable for moving the component or allowing it to move to and from the desired position;
a latch member (31) and an actuator (28) and a locking member (33);
and characterised in that:
the latch member (31) and the actuator (28) are carried on one of either the component or the supporting part;
the locking member (33) is carried by the other one of the component and the supporting part and is movable relative thereto between inoperative and locking positions and is normally urged to the inoperative position;
and for locking the component (16) in the desired position said means (21,23,15) is operated to move or allow the component (16) to move initially to an approach position in which the actuator rod (27) of the actuator (28) is moved to a locking position and in doing so causes the locking member (33) to be moved into its locking position, and then said means (21,23,15) is operated to move the component, or allow the component to move, from the approach position to the desired position at which the locking member (33) and latch member (31) engage in a locking relationship to lock the component in the desired position;
said means (21,23,15) having to be operated to move the component, or allow it to move, from the desired position to the approach position, and the actuator (28) having to be returned to its inoperative position before the locking member (33) can move back to its inoperative position.

2. A method according to Claim 1 characterised in that the actuator (28) is air operated and re-application of pressure air to the actuator moves the actuator to the inoperative position.

3. A method according to Claim 1 or Claim 2 characterised in that the said means (21,23,15) and the actuator (28) are both air operated and are sequentially operated automatically in their respective movements for locking and release of the component in and from the desired position.

4. A method according to any preceding claim characterised in that the actuator (28) comprises a spring brake actuator which is fitted to the vehicle for operation of a wheel brake of the vehicle.

5. A method according to any preceding claim characterised in that the locking member (33) comprises at least one pivoted arm (35) having a hook (36) which engages with the latch member (31) in the locking relationship of the locking member (33) with the latch member (31).

6. A method according to Claim 5 characterised in that the pivoted arm (35) has an associated arm (34) which is pivotal therewith, the pivoted arm (35) being spring-urged towards the inoperative position of the locking member (33) and caused to be pivoted by the actuator (28) for engagement of the hook (36) of the latch member (31) in the locking relationship, the pivoted arm (35) and the associated arm (34) being relatively pivotable but normally restrained from relative pivotal movement by spring means (30) which permit relative pivotal movement if the actuator (28) should cause the associated arm (34) to be pivoted more than is necessary for the locking member (33) to engage and lock the latch member (31).

7. A method according to Claim 6 characterised in that the actuator (28) pivots a brake lever (26) of a wheel brake of the vehicle which co-operates with the associated arm (34) to cause the pivoted arm (35) to move to the locking position of the locking member (33) for engagement of the hook (36) with the latch member (31).

8. A method according to any preceding claim characterised in that said means (21,23,15) comprises at least one pivoted beam (21) mounted on the supporting part and connected at one side of its pivotal axis to the component (16), and being connected at the opposite side of its pivotal axis to load-applying means (23)comprising at least one air bag to which pressure air is supplied to pivot the beam (21) in a direction to move the component to the desired position.

9. A method according to any preceding claim characterised in that second locking means is provided to retain the component (16) in a second desired position, comprising a second latch member (10C) which is movable with the component (16), at least one stop (12A) adapted to be fixed to the or a supporting part of the vehicle with which the second latch member (10C) engages in the second desired position of the component, and a second locking member (50) and associated second actuator (44) adapted to be mounted on the or a supporting part of the vehicle, the second locking member (50) being movable by the second actuator (44) into engagement with the second latch member (10C) in opposition to the stop (12A) to prevent the second latch member (10C) from moving away from the stop (12A).

10. A method according to Claim 9 characterised in that the second actuator (44) spring-urges the second locking member (50) into an operative position to engage with the second latch member (10C) in opposition to the stop (12A), and the second actuator (44) is air operated to retract the second locking member (50) from the operative position and release the second latch member (10C).

11. A method according to any preceding claim characterised in that the component is a road wheel axle (16) which is movable between a lowered operative position and a raised in-operative position, and the desired position is one of those positions of the axle.

12. A method according to Claim 11 as dependent from Claim 8 characterised in that the axle (16) is mounted adjacent each end on a leaf spring (13), each leaf spring (13) is pivoted at one end to a respective bracket (11) secured to the chassis (12), the brake lever (26), the, or the first, latch member (31) and spring brake actuator (24) for each end of the axle (10) are supported on the axle (10), a beam (21) is pivoted to each bracket (11) and bears at one end on the respective leaf spring (13) near to the axle (16), and at the opposite side of its pivotal axis is engaged by the load-applying means (23) which is secured to the chassis (12) and when operated pivots the beams (21) to cause the leaf springs (13) to be moved from a normal operative position and thereby move the axle (16) to its raised in-operative position, and the locking member (33) is retained to the chassis (12) and comprises a pivoted arm (35) pivotable by means of the actuator (28) having a hook (36) which is engageable with the latch member (31) by pivoting of the arm by movement of the actuator (28) to its locking position when the axle (16) has been moved to its raised in-operative position to retain the axle (16) in that position.

13. A method according to Claim 12 characterised in that the load-applying means (23) comprises at least one air bag (23) to which pressure air is supplied to pivot the beams (21) in the direction to move the leaf springs (13) to cause the axle (16) to be moved to its raised in-operative position, and the actuator (28) is linked with the air bag (23) to be operated to move the locking member (33) into its locking position for locking engagement with the latch member (31) when the axle (16) has reached its raised in-operative position.

14. A method according to Claim 9 characterised in that the second desired position of the axle is the lowered operative position.

15. A method according to Claim 14 characterised in that the axle (16) is connected to brackets (11) spaced transversely of the vehicle and pivotally mounted on the chassis (12), the load-applying means (23) is secured to the chassis (12) and is connected to, or connects with, the brackets (11) such that when the load-applying means (23) is operated it causes the brackets (11) to be pivoted, and in respect of the locking means (33) to retain the axle (16) in the lowered operative position the second latch member (10C) thereof is carried by its bracket and is pivotal therewith relative to the chassis (12), the stop (12A) thereof is fixed to the chassis (12) below the second latch member (10C), and the second locking member (50) and operating second actuator (44) therefor are mounted on the chassis (12), the second locking member (50) being movable by the second actuator (44) relative to the chassis (12) and said second latch member (10C) into engagement with the second latch member (10C) in opposition to the stop (12A) to prevent the second latch member (10C) from moving away from the stop (12A).

16. A method according to Claim 15 characterised in that each end of the axle (16) is mounted on a leaf spring (13) pivoted at one end to its respective bracket (11), and an air spring (15) is connected to and acts between the leaf spring (13) and the chassis (12) to allow movement of the leaf spring (13) and axle (16) relative to the chassis, and in that the bracket (11) carries an auxiliary air bag (15) which is connected to the leaf spring (13) to act between the leaf spring (13) and the bracket (11) so as to move the leaf spring (13) relative to the bracket (11) towards engagement of the first latch member (31) mounted on the axle (16) with the first locking member (33) pivotally mounted on the chassis (12), for retention of the axle (16) in the raised in-operative position.

17. A vehicle comprising a supporting part (12), a movable component (16) lockable in a desired position relative to the supporting parts, means (21,23,15) operable for moving the component or allowing it to move to and from the desired position, a latch member (31), an actuator (28) and a locking member (33), and characterised in that the movable component (16) is releasably lockable in the desired position by the method as claimed in any preceding claim.

18. A vehicle as claimed in Claim 17 characterised in that it is a freight carrying road trailer adapted for rail travel, the supporting part (12) being a chassis (12) of the vehicle, and the movable component (16) being a road wheel axle (16) which is a suspended axle of running gear of the trailer movable between a lowered operative position and a raised inoperative position in which the road wheel axle (16) is lockable.

19. A locking mechanism adapted for releasably locking a movable component (16) of a vehicle in a desired position relative to a supporting part (12) of the vehicle comprising:
means (21,23,15) on the vehicle operable for moving the component or allowing it to move to and from the desired position;
a latch member (31) and an actuator (28) and a locking member (33);
and characterised in that:
the latch member (31) and the actuator (28) are carried on one of either the component or the supporting part;
the locking member (33) is carried by the other one of the component and the supporting part and is movable relative thereto between inoperative and locking positions and is normally urged to the inoperative position;
the movable component (16) being releasably lockable in the desired position by the method as claimed in any one of Claims 1 to 16.

## Patentansprüche

1. Ein Verfahren zum lösbaren Arretieren oder Blockieren einer beweglichen Komponente eines Fahrzeugs in einer gewünschten Position relativ zu einem Trägerteil des Fahrzeugs, wobei vorgesehen sind:
Mittel (21, 23, 15) an dem Fahrzeug, welche betriebsfähig sind, um die Komponente in die gewünschte Position hinein oder von der gewünschten Position weg zu bewegen, oder um es der Komponente zu erlauben, sich in die gewünschte Position hinein oder von der gewünschten Position weg zu bewegen;
ein Verriegelungsglied (31) und ein Betätigungsorgan (28) und ein Arretier- oder Sperrelement (33);
**dadurch gekennzeichnet, daß**
das Verriegelungsglied (31) und das Betätigungsorgan (28) entweder auf der Komponente oder dem Trägerteil getragen werden;
das Arretier- oder Sperr-Element (33) durch das andere der von der Komponente und dem Trägerteil gebildeten Teile getragen wird und relativ hierzu zwischen einer unwirksamen Position und einer Arretier- oder Sport-Position beweglich ist und normalerweise in die unwirksame Position hinein gedrängt ist;
und zum Arretieren der Komponente (16) in der gewünschten Position die genannten Mittel (21, 23, 15) in Betrieb gesetzt werden, um die Komponente (16) anfänglich in eine Annäherungsposition hinein zu bewegen oder um es der Komponente (16) zu erlauben, sich anfänglich in eine Annäherungsposition hineinzubewegen, in welcher die Betätigungsstange (27) des Betätigungsorgans (28) in eine Arretier- oder Sportposition hinein bewegt ist und bei diesem Vorgang das Arretier- oder Sperr-Element (33) dazu veranlaßt, in seine Arretier- oder Sperrposition hineinbewegt zu werden, und sodann die genannten Mittel (21, 23, 15) in Betrieb gesetzt werden, um die Komponente aus der Annäherungsposition in die gewünschte Position hineinzubewegen oder um es der Komponente zu erlauben, sich aus der Annäherungsposition in die gewünschte Position hineinzubewegen, m welcher das Arretier- oder Sperrelement (33) und das Verriegelungsglied (31) in einer Arretierungsbeziehung miteinander in Eingriff gelangen, um die Komponente in der gewünschten Position zu arretieren;
wobei die genannten Mittel (21, 23, 15) in Betrieb zu setzen sind, um die Komponente aus der gewünschten Position in die Annäherungsposition hinein zu bewegen oder um es der Komponente zu erlauben, sich aus der gewünschten Position in die Annäherungsposition hinein zu bewegen, und wobei das Betätigungsorgan (28) in seine unwirksame Position zurückzubringen ist, bevor das Arretier- oder Sperrelement (33) sich zurück in seine unwirksame Position bewegen kann.

2. Ein Verfahren nach Anspruch 1,
**dadurch gekennzeichnet,**
daß das Betätigungsorgan (28) durch Druckluft betätigt wird und die Wiederanwendung von Druckluft auf das Betätigungsorgan dieses in die unwirksame Position hinein bewegt.

3. Ein Verfahren gemäß Anspruch 1 oder Anspruch 2,
**dadurch gekennzeichnet,**
daß sowohl die genannten Mittel (21, 23, 15) als auch das Betätigungsorgan (28) durch Druckluft betätigt werden und automatisch aufeinanderfolgend zu ihren jeweiligen Bewegungen veranlaßt werden, um die Komponente in der gewünschten Position zu arretieren und um die Komponente aus der gewünschten Position freizugeben.

4. Ein Verfahren gemäß einem der vorhergehenden Ansprüche,
**dadurch gekennzeichnet,**
daß das Betätigungsorgan (28) ein Federbrems-Betätigungselement aufweist, welches an dem Fahrzeug angebracht ist, um eine Radbremse des Fahrzeugs in Betrieb zu setzen.

5. Ein Verfahren gemäß einem der vorhergehenden Ansprüche,
**dadurch gekennzeichnet,**
daß das Arretier- oder Sperrelement (33) wenigstens einen drehbar angelenkten Arm (35) mit einem Haken (36) aufweist, der mit dem Verriegelungsglied (31) in der Arretierungsbeziehung zwischen dem Arretier- oder Sperrelement (33) und dem Verriegelungsglied (31) in Eingriff gelangt.

6. Ein Verfahren gemäß Anspruch 5,
**dadurch gekennzeichnet,**
daß der drehbar angelenkte Arm (35) einen mit ihm verbundenen Arm (34) aufweist, welcher mit ihm schwenkbar ist, wobei der drehbar angelenkte Arm (35) in Richtung zu der unwirksamen Position des Arretier- oder Sperrelementes (33) mittels Federkraft gedrängt und dazu veranlaßt wird, durch das Betätigungsorgan (28) geschwenkt zu werden, um ein Ineingriffgelangen des Hakens (36) des Verriegelungsgliedes (31) in der Arretierungsbeziehung zu erzielen, wobei der drehbar angelenkte Arm (35) und der mit ihm verbundene Arm (34) relativ schwenkbar sind, jedoch normalerweise von einer relativen Schwenkbewegung durch eine Federvorrichtung (30) abgehalten werden, welche eine relative Schwenkbewegung erlaubt, wenn das Betätigungsorgan (28) den zugeordneten Arm (34) dazu veranlassen sollte, mehr geschwenkt zu werden, als dies für das Arretier- oder Sperrelement (33) erforderlich ist, um mit dem Verriegelungsglied (31) in Eingriff zu gelangen und um das Verriegelungsglied (31) zu blockieren.

7. Ein Verfahren gemäß Anspruch 6,
**dadurch gekennzeichnet,**
daß das Betätigungsorgan (28) einen Bremshebel (26) einer Radbremse des Fahrzeuges schwenkt, welcher mit dem zugeordneten Arm (34) zusammenarbeitet, um den drehbar angelenkten Arm (35) dazu zu veranlassen, sich in die Arretier oder Sperrstellung des Arretier- oder Sperrelementes (33) hineinzubewegen, um ein Ineingriffgelangen des Hakens (36) mit dem Verriegelungsglied (31) zu erzielen.

8. Ein Verfahren gemäß einem der vorhergehenden Ansprüche,
**dadurch gekennzeichnet,**
daß die genannten Mittel (21, 23, 15) wenigstens einen drehbar angelenkten Träger (21) aufweisen, der an dem Trägerteil angeordnet ist und an einer Seite seiner Schwenkachse mit der Komponente (16) verbunden ist und auf der gegenüberliegenden Seite seiner Schwenkachse mit lastaufbringenden Mitteln (23) verbunden ist, welche wenigstens einen Luftsack aufweisen, welchem Druckluft zugeführt wird, um den Träger (21) in eine Richtung zu schwenken, um die Komponente in die gewünschte Position hineinzubewegen.

9. Ein Verfahren gemäß einem der vorhergehenden Ansprüche,
**dadurch gekennzeichnet,**
daß zweite Arretier oder Sperrmittel vorgesehen sind, um die Komponente (16) in einer zweiten gewünschten Position zurückzuhalten, und wobei die zweiten Arretier- oder Sport-Mittel aufweisen: ein zweites Verriegelungsglied (10C), welches mit der Komponente (16) bewegbar ist, wenigstens einen Anschlag (12A), der dazu befähigt ist, an dem oder an einem Trägerteil des Fahrzeuges befestigt zu werden, mit welchem das zweite Verriegelungsglied (10C) in der zweiten gewünschten Position der Komponente in Eingriff gelangt, sowie ein zweites Arretier- oder Sperrelement (50) und ein zugeordnetes zweites Betätigungsorgan (44), welches dazu befähigt ist, an dem oder an einem Trägerteil des Fahrzeuges befestigt zu werden, wobei das zweite Arretier oder Sperr-Element (50) durch das zweite Betätigungsorgan (44) in ein Ineingriffgelangen mit dem zweiten Verriegelungsglied (10C) in Gegenüberstellung zu dem Anschlag (12A) bewegbar ist, um das zweite Verriegelungsglied (10C) an einer Bewegung in Richtung weg von dem Anschlag (12A) zu hindern.

10. Ein Verfahren gemäß Anspruch 9,
**dadurch gekennzeichnet,**
daß das zweite Betätigungsorgan (44) das zweite Arretier- oder Sperr-Element (50) in eine wirksame Position durch Federkraft drängt, um mit dem zweiten Verriegelungsglied (10C) in Gegenüberstellung zu dem Anschlag (12A) in Eingriff zu gelangen, und daß das zweite Betätigungsorgan (44) druckluftbetätigt ist, um das zweite Arretier- oder Sperrelement (50) aus der wirksamen Position zurückzuziehen und um das zweite Verriegelungsglied (10C) freizugeben.

11. Ein Verfahren gemäß einem der vorhergehenden Ansprüche,
**dadurch gekennzeichnet,**
daß die Komponente eine Laufradachse (16) ist, die zwischen einer abgesenkten wirksamen Position und einer angehobenen unwirksamen Position bewegbar ist, und daß die gewünschte Position eine dieser Positionen der Achse ist.

12. Ein Verfahren gemäß Anspruch 11 in Abhängigkeit von Anspruch 8,
**dadurch gekennzeichnet,**
daß die Achse (16) zu jedem Ende an einer Blattfeder (13) benachbart angeordnet ist, wobei jede Blattfeder (13) an einem Ende an einem entsprechenden Trägerarm (11) drehbar angelenkt ist, der mit dem Chassis (12) befestigt ist, daß der Bremshebel (26), das oder das erste Verriegelungsglied (31) und das Federbrems-Betätigungselement (24) für jedes Ende der Achse (16) auf der Achse (16) getragen sind, daß ein Träger (21) an jedem Trägerarm (11) drehbar angelenkt ist und sich an dem einen Ende auf der jeweiligen Blattfeder (13) nahe bei der Achse (16) abstützt und auf der gegenüberliegenden Seite seiner Dreh- oder Schwenkachse mit den lastaufbringenden Mitteln (23) in Eingriff steht, welche mit dem Chassis (12) befestigt sind und, wenn sie betätigt oder in Betrieb gesetzt werden, die Träger (21) schwenken, um die Blattfedern (13) dazu zu veranlassen, aus einer normalen Betriebsposition oder wirksamen Position bewegt zu werden und um hierdurch die Achse (16) in ihre angehobene unwirksame Position hineinzubewegen, und daß das Arretier- oder Sperr-Element (33) an oder auf dem Chassis (12) gehalten ist und einen drehbar angelenkten Arm (35) aufweist, der mittels des Betätigungsorgans (28) mit einem Haken (36) schwenkbar ist, der mit dem Verriegelungsglied (31) durch Schwenken des Armes durch Bewegung des Betätigungsorgans (28) in seine Arretier- oder Sperrstellung hinein in Eingriff bringbar ist, wenn die Achse (16) in ihre angehobene unwirksame Position hinein bewegt worden ist, um die Achse (16) in dieser Position zu halten.

13. Ein Verfahren gemäß Anspruch 12,
**dadurch gekennzeichnet,**
daß die lastaufbringenden Mittel (23) wenigstens einen Luftsack (23) aufweisen, welchem Druckluft zugeführt wird, um die Träger (21) in der Richtung zum Bewegen der Blattfedern (13) zu schwenken, um die Achse (16) dazu zu veranlassen, in ihre angehobene unwirksame Position hinein bewegt zu werden, und daß das Betätigungsorgan (28) mit dem Luftsack (23) verbunden ist, um in Betrieb gesetzt oder betätigt zu werden, um das Arretier- oder Sperrelement (33) in seine Arretier- oder Sperrposition hinein zum Zwecke eines arretierenden oder sperrenden Ineingriffgelangens mit dem Verriegelungsglied (31) zu bewegen, wenn die Achse (16) ihre angehobene unwirksame Position erreicht hat.

14. Ein Verfahren gemäß Anspruch 9,
**dadurch gekennzeichnet,**
daß die zweite gewünschte Position der Achse die abgesenkte wirksame Position ist.

15. Ein Verfahren gemäß Anspruch 14,
**dadurch gekennzeichnet,**
daß die Achse (16) mit Trägerarmen (11) verbunden ist, die in der Querrichtung des Fahrzeuges gegenseitig beabstandet und an dem Chassis (12) schwenkbar angeordnet sind, daß die lastaufbringenden Mittel (23) mit dem Chassis (12) befestigt und in der Weise mit den Trägerarmen (11) verbunden sind oder mit den Trägerarmen (11) in der Weise eine Verbindung herstellen, daß die lastaufbringenden Mittel (23), wenn sie betätigt oder in Betrieb gesetzt werden, die Trägerarme (11) dazu veranlassen, geschwenkt zu werden und in Bezug auf die Arretier- oder Sperrmittel (33) die Achse (16) in der abgesenkten wirksamen Position zu halten, daß deren zweites Verriegelungsglied (10C) durch ihren Trägeran getragen ist und an diesem relativ zu dem Chassis (12) drehbar angelenkt ist, daß deren Anschlag (12A) mit dem Chassis (12) unterhalb des zweiten Verriegelungsgliedes (10C) befestigt ist, und daß das zweite Arretier- oder Sperr-Element (50) und das betätigende zweite Betätigungsorgan (44) hierfür an dem Chassis (12) befestigt sind, wobei das zweite Arretier- oder Sperr-Element (50) durch das zweite Betätigungsorgan (44) relativ zu dem Chassis (12) und dem genannten zweiten Verriegelungsglied (10C) in ein Ineingriffgelangen mit dem zweiten Verriegelungsglied (10C) in Gegenüberstellung zu dem Anschlag (12A) bewegbar ist, um das zweite Verriegelungsglied (10C) an einer Bewegung weg von dem Anschlag (12A) zu hindern.

16. Ein Verfahren gemäß Anspruch 15,
**dadurch gekennzeichnet,**
daß ein jedes Ende der Achse (16) auf einer Blattfeder (13) angeordnet ist, die an einem Ende an ihrem entsprechenden Trägerarm (11) drehbar angelenkt ist, und daß eine Luft- oder Gasfeder (15) mit der Blattfeder (13) und dem Chassis (12) verbunden ist und zwischen der Blattfeder (13) und dem Chassis (12) wirkt, um eine Bewegung der Blattfeder (13) und der Achse (16) relativ zu dem Chassis zu erlauben, und daß der Trägerarm (11) einen Hilfs-Luftsack (15) trägt, welcher mit der Blattfeder (13) verbunden ist, um zwischen der Blattfeder (13) und dem Trägerarm (11) zu wirken, um die Blattfeder (13) relativ zu dem Trägerarm (11) in Richtung zu einem Ineingriffgelangen des auf der Achse (16) befestigten ersten Verriegelungsgliedes (31) mit dem ersten Arretier- oder Sperrelement (33) zu bewegen, welches auf oder an dem Chassis (12) schwenkbar angebracht ist, um die Achse (16) in der angehobenen unwirksamen Position zu halten.

17. Ein Fahrzeug, aufweisend: ein Trägerteil (12), eine bewegliche oder bewegbare Komponente (16), die in einer gewünschten Position relativ zu den Trägerteilen verriegelbar ist, Mittel (21, 23, 15), die betriebsfähig sind, um die Komponente in die gewünschte Position hinein und aus der gewünschten Position heraus zu bewegen, oder um es der Komponente zu erlauben, sich in die gewünschte Position hinein oder aus der gewünschten Position heraus zu bewegen, ein Verriegelungsglied (31), ein Betätigungsorgan (28) und ein Arretier- oder Sperrelement (33),
**dadurch gekennzeichnet,**
daß die bewegbare oder bewegliche Komponente (16) in der gewünschten Position durch das Verfahren, wie in einem der vorhergehenden Ansprüche beansprucht, in lösbarer Weise arretierbar oder blockierbar ist.

18. Ein Fahrzeug, wie in Anspruch 17 beansprucht,
**dadurch gekennzeichnet,**
daß es ein Fracht tragender Straßenfahrzeuganhänger ist, welcher für Eisenbahn-Transport oder Beförderung durch Schienenverkehr geeignet ist, wobei das Trägerteil (12) ein Chassis (12) des Fahrzeuges ist und wobei die bewegliche Komponente (16) eine Laufradachse (16) ist, die eine aufgehängte Achse eines Fahrwerks oder Fahrgestells des Anhängers ist, welche zwischen einer abgesenkten wirksamen Position und einer angehobenen unwirksamen Position beweglich oder bewegbar ist, in welcher die Laufradachse (16) arretierbar oder blockierbar ist.

19. Ein Arretierungs- oder Blockierungs-Mechanismus, der zum lösbaren Arretieren oder Blockieren einer beweglichen Komponente (16) eines Fahrzeuges in einer gewünschten Position relativ zu einem Trägerteil (12) des Fahrzeuges befähigt ist, aufweisend:
Mittel (21, 23, 15) an dem Fahrzeug, die betriebsfähig sind, um die Komponente in die gewünschte Position hinein oder aus der gewünschten Position heraus zu bewegen, oder um es der Komponente zu erlauben, sich in die gewünschte Position hinein und aus der gewünschten Position heraus zu bewegen;
ein Verriegelungsglied (31) und ein Betätigungsorgan (28) und ein Arretier- oder Sperrelement (33);
**dadurch gekennzeichnet,**
daß das Verriegelungsglied (31) und das Betätigungsorgan (28) entweder auf der Komponente oder dem Trägerteil getragen sind;
das Arretier- oder Sperrelement (33) durch das andere der von der Komponente und dem Trägerteil gebildeten Teile getragen ist und relativ hierzu zwischen einer unwirksamen Position und einer Arretier- oder Blockierposition bewegbar ist und normalerweise in die unwirksame Position hinein gedrängt ist;
wobei die bewegliche Komponente (16) in der gewünschten Position durch das Verfahren, wie in einem der Ansprüche 1 bis 16 beansprucht, in lösbarer Weise arretierbar oder blockierbar ist.

## Revendications

1. Procédé pour bloquer, de façon déverrouillable, un composant mobile d'un véhicule dans une position souhaitée par rapport à une partie d'appui du véhicule, comprenant :
un moyen (21, 23, 15) sur le véhicule, pouvant être actionné pour déplacer le composant ou lui permettre de se déplacer vers et à partir de la position souhaitée ;
un élément de verrouillage (31) et un vérin (28) et un élément de blocage (33) ;
et caractérisé en ce que :
l'élément de verrouillage (31) et le vérin (28) sont portés soit par le composant, soit par la partie d'appui ;
l'élément de blocage (33) est porté par l'autre composant ou partie d'appui, et qu'il est mobile par rapport à celui-ci ou celle-ci entre une position de repos et une position de blocage, et est normalement déplacé vers la position de repos ;
et, que pour bloquer le composant (16) dans la position souhaitée, ledit moyen (21, 23, 15) est actionné de façon à déplacer ou permettre au composant (16) de se déplacer initialement vers une position d'approche dans laquelle la tige (27) du vérin (28) est déplacée vers une position de blocage et, par conséquent, provoquer le déplacement de l'élément de blocage (33) vers sa position de blocage, et qu'ensuite ledit moyen (21, 23, 15) est actionné de façon à déplacer le composant, ou permettre au composant de se déplacer, de la position d'approche vers la position souhaitée dans laquelle l'élément de blocage (33) et l'élément de verrouillage (31) s'engrènent de façon à s'enclencher et ainsi bloquer le composant dans la position souhaitée ;
ledit moyen (21, 23, 15) devant être actionné de façon à déplacer le composant, ou lui permettre de se déplacer, de la position souhaitée vers la position d'approche, et le vérin (28) devant retourner à sa position de repos avant que l'élément de blocage (33) ne puisse retourner à sa position de repos.

2. Procédé selon la revendication 1, caractérisé en ce que le vérin (28) est pneumatique et la réapplication d'air pressurisé sur le vérin déplace le vérin vers la position de repos.

3. Procédé selon la revendication 1 ou 2, caractérisé en ce que ledit moyen (21, 23, 15) et le vérin (28) sont tous les deux pneumatiques et que leurs mouvements respectifs sont actionnés automatiquement de façon séquentielle de façon à bloquer et déverrouiller le composant vers et à partir de la position souhaitée.

4. Procédé selon l'une quelconque des revendications précédentes, caractérisé en ce que le vérin (28) comprend un vérin de frein à ressort monté sur le véhicule et destiné à actionner un frein de roue du véhicule.

5. Procédé selon l'une quelconque des revendications précédentes, caractérisé en ce que l'élément de blocage (33) comprend au moins un bras pivotant (35) muni d'un crochet (36) qui s'engrène avec l'élément de verrouillage (31) lors de l'enclenchement de l'élément de blocage (33) avec l'élément de verrouillage (31).

6. Procédé selon la revendication 5, caractérisé en ce que le bras pivotant (35) possède un bras associé (34) pivotant sur celui-ci, le bras pivotant (35) étant déplacé sous pression de ressort vers la position de repos de l'élément de blocage (33) et forcé à pivoter par le vérin (28) de façon à ce que le crochet (36) de l'élément de verrouillage (31) s'engrène dans l'enclenchement, le bras pivotant (35) et le bras associé (34) étant relativement pivotants mais ne pouvant normalement effectuer un mouvement pivotant relatif par des moyens de ressort (30) permettant un mouvement pivotant relatif dans le cas où le vérin (28) provoque un pivotement du bras associé (34) plus important que celui nécessaire pour que l'élément de blocage (33) s'engrène avec l'élément de verrouillage (31) et bloque celui-ci.

7. Procédé selon la revendication 6, caractérisé en ce que le vérin (28) fait pivoter un levier de commande de frein (26) d'un frein de roue du véhicule qui coopère avec le bras associé (34) pour provoquer le déplacement du bras pivotant (35) vers la position de blocage de l'élément de blocage (33) de façon à ce que le crochet (36) s'engrène avec l'élément de verrouillage (31).

8. Procédé selon l'une quelconque des revendications précédentes, caractérisé en ce que ledit moyen (21, 23, 15) comprend au moins un profilé pivotant (21) monté sur la partie d'appui et relié sur un côté de son axe de pivotement au composant (16), et étant relié sur le côté opposé de son axe de pivotement à un moyen d'application de charge (23) comprenant au moins un coussin pneumatique auquel de l'air pressurisé est fourni afin de faire pivoter le profité (21) dans un sens de façon à déplacer le composant vers la position souhaitée.

9. Procédé selon l'une quelconque des revendications précédentes, caractérisé en ce qu'un deuxième élément de blocage est prévu pour retenir le composant (16) dans une deuxième position souhaitée, comprenant un deuxième élément de verrouillage (10C) pouvant être déplacé avec le composant (16), au moins un arrêt (12A), conçu pour être fixé au véhicule ou à une partie d'appui de celui-ci, avec lequel le deuxième élément de verrouillage (10C) s'engrène dans la deuxième position souhaitée du composant, et un deuxième élément de blocage (50) et un deuxième vérin associé (44) conçu pour être monté sur le véhicule ou sur une partie d'appui de celui-ci, le deuxième élément de blocage (50) pouvant être déplacé par le deuxième vérin (44) de façon à s'engrener avec le deuxième élément de verrouillage (10C) en opposition à l'arrêt (12A) afin d'empêcher le deuxième élément de verrouillage (10C) de s'éloigner de l'arrêt (12A).

10. Procédé selon la revendication 9, caractérisé en ce que le deuxième vérin (44) déplace le deuxième élément de blocage (50) sous pression de ressort vers une position de service de façon à s'engrener avec le deuxième élément de verrouillage (10C) en opposition à l'arrêt (12A), et en ce que le deuxième vérin (44) est commandé par air de façon à retirer le deuxième élément de blocage (50) de la position de service et dégager le deuxième élément de verrouillage (10C).

11. Procédé selon l'une quelconque des revendications précédentes, caractérisé en ce que le composant est un essieu de roues (16) pouvant être déplacé entre une position de service abaissée et une position de repos soulevée, et en ce que la position souhaitée correspond à une de ces positions de l'essieu.

12. Procédé selon la revendication 11 et dépendant de la revendication 8, caractérisé en ce que l'essieu (16) est monté, à chacune de ses extrémités, sur un ressort à lames (13) adjacent, chaque ressort à lames (13) pivotant sur une de ses extrémités vers une bride (11) fixée sur le châssis (12), le levier de commande de frein (26), l'élément ou le premier élément de verrouillage (31) et le vérin de frein à ressort (24) à chaque extrémité de l'essieu (10) étant soutenus par l'essieu (10), un profilé (21) pivotant vers chaque bride (11) et portant sur une de ses extrémités le ressort à lames (13) correspondant près de l'essieu (16), et étant attaqué, sur le côté opposé de son axe de pivotement, par le moyen d'application de charge (23), lequel est fixé sur le châssis (12) et, lorsqu'il est actionné, fait pivoter les profilés (21) afin de provoquer le déplacement des ressorts à lames (13) vers une position de service normale, déplaçant par conséquent l'essieu (16) vers sa position de repos soulevée, l'élément de blocage (33) étant retenu sur le châssis (12) et comprenant un bras pivotant (35) pouvant pivoter par l'intermédiaire du vérin (28) et possédant un crochet (36) pouvant s'engrener avec l'élément de verrouillage (31) du fait du pivotement du bras, provoqué par le mouvement du vérin (28), vers sa position de blocage lorsque l'essieu (16) est déplacé vers sa position de repos soulevée, afin de retenir l'essieu (16) dans cette position.

13. Procédé selon la revendication 12, caractérisé en ce que le moyen d'application de charge (23) comprend au moins un coussin pneumatique (23) auquel de l'air pressurisé est fourni afin de faire pivoter les profilés (21) dans un sens permettant de déplacer les ressorts à lames (13) de façon à provoquer le déplacement de l'essieu (16) vers sa position de repos soulevée, et en ce que le vérin (28) est relié au coussin pneumatique (23) afin d'être actionné pour déplacer l'élément de blocage (33) vers sa position de blocage de façon à s'enclencher avec l'élément de verrouillage (31) lorsque l'essieu (16) a atteint sa position de repos soulevée.

14. Procédé selon la revendication 9, caractérisé en ce que la deuxième position souhaitée de l'essieu correspond à la position de service abaissée.

15. Procédé selon la revendication 14, caractérisé en ce que l'essieu (16) est accouplé à des brides (11) espacées transversalement sur le véhicule et montées de manière pivotante sur le châssis (12), le moyen d'application de charge (23) est fixé sur le châssis (12) et accouplé, ou s'accouple aux brides (11) de telle façon que, lorsque le moyen d'application de charge (23) est actionné, il provoque le pivotement des brides (11) et par rapport à l'élément de blocage (33), afin de retenir l'essieu (16) dans la position de service abaissée et le deuxième élément de verrouillage (10C) correspondant est porté par sa bride et pivote sur celle-ci par rapport au châssis (12), l'arrêt (12A) correspondant est fixé au châssis (12) sous le deuxième élément de verrouillage (10C), et le deuxième élément de blocage (50) et le deuxième vérin actionné (44) sont donc montés sur le châssis (12), le deuxième élément de blocage (50) pouvant être déplacé par le deuxième vérin (44) par rapport au châssis (12) et audit deuxième élément de verrouillage (10C) de façon à s'engrener avec le deuxième élément (10C) en opposition à l'arrêt afin d'empêcher le deuxième élément de verrouillage (10C) de s'éloigner de l'arrêt (12A).

16. Procédé selon la revendication 15, caractérisé en ce que chaque extrémité de l'essieu (16) est montée sur un ressort à lames (13) pivotant à une extrémité par rapport à sa bride (11) correspondante et qu'un ressort à air (15) est relié au ressort à lames (13) et au châssis (12) et agit entre ceux-ci de façon à permettre au ressort à lames (13) et à l'essieu de se déplacer par rapport au châssis, et en ce que la bride (11) porte un coussin pneumatique auxiliaire (15) qui est relié au ressort à lames (13) pour agir entre le ressort à lames (13) et la bride (11) de façon à déplacer le ressort à lames (13) par rapport à la bride (11) vers l'engrènement du premier élément de verrouillage (31) monté sur l'essieu (16) avec le premier élément de blocage (33) monté de manière pivotante sur le châssis (12), afin de retenir l'essieu (16) dans la position de repos soulevée.

17. Véhicule comprenant un partie d'appui (12), un composant mobile (16) pouvant être bloqué dans une position souhaitée par rapport aux parties d'appui, un moyen (21, 23, 15) actionnable afin de déplacer le composant ou lui permettre de se déplacer à partir de et vers la position souhaitée, un élément de verrouillage (31), un vérin (28) et un élément de blocage (33), et caractérisé en ce que le composant mobile (16) peut être bloqué, de façon déverrouillable, dans la position souhaitée par l'intermédiaire du procédé selon l'une quelconque des revendications précédentes.

18. Véhicule selon la revendication 17, caractérisé en ce qu'il s'agit d'une remorque routière à marchandises adaptée pour le déplacement sur rails, la partie d'appui (12) étant un châssis (12) du véhicule, et le composant mobile (16) étant un essieu de roues (16) qui est un essieu suspendu faisant partie du mécanisme de roulement de la remorque et pouvant se déplacer entre une position de service abaissée et une position de repos soulevée dans laquelle l'essieu de roues (16) est verrouillable.

19. Mécanisme de blocage conçu pour bloquer, de façon déverrouillable, un composant mobile (16) d'un véhicule dans une position souhaitée par rapport à une partie d'appui (12) du véhicule, comprenant :
un moyen (21, 23, 15) sur le véhicule, actionnable afin de déplacer le composant ou lui permettre de se déplacer à partir de et vers la position souhaitée ;
un élément de verrouillage (31) et un vérin (28) et un élément de blocage (33) ;
et caractérisé en ce que :
l'élément de verrouillage (31) et le vérin (28) sont portés soit par le composant, soit par la partie d'appui ;
l'élément de blocage (33) est porté par l'autre composant et la partie d'appui et est mobile par rapport à celui-ci ou celle-ci entre une position de repos et une position de blocage, et est normalement déplacé vers la position de repos ;
le composant mobile (16) pouvant être bloqué, de façon déverrouillable, dans la position souhaitée par l'intermédiaire du procédé selon l'une quelconque des revendications 1 à 16.
